# EUROPÄISCHE PATENTSCHRIFT

(11) **EP 1 739 008 B1**
(45) Veröffentlichungstag und Bekanntmachung des Hinweises auf die Patenterteilung: **10.12.2008**
(21) Anmeldenummer: 05019325.9
(22) Anmeldetag: 06.09.2005
(51) Int. Cl.: B63H 25/38, F16C 3/02

(54) **Ruderschaft für Ruder für Wasserfahrzeuge**
Rudder shaft for a watercraft rudder
Arbre de safran pour un safran de gouvernail d'un bateau

(30) Priorität: 30.06.2005 DE 202005010469 U; 26.08.2005 DE 202005013583 U
(43) Veröffentlichungstag der Anmeldung: 03.01.2007
(73) Patentinhaber: Becker Marine Systems GmbH & Co. KG, 21079 Hamburg (DE)
(72) Erfinder: Lehmann, Dirk, Dipl.-Ing., 21423 Winsen (DE)
(74) Vertreter: Richter, Werdermann, Gerbaulet & Hofmann

(56) Entgegenhaltungen:
- EP-A- 0 579 533
- EP-A- 0 580 463
- US-A- 4 284 025
- US-B1- 6 227 131
- US-B1- 6 350 204
- US-B1- 6 464 591

## Beschreibung

Die Erfindung betrifft einen Ruderschaft für Ruder für Wasserfahrzeuge.

Ruderschäfte für Ruder für Wasserfahrzeuge werden vorwiegend aus Schmiedeeisen hergestellt. Sollen Ruderschäfte mit großer Länge geschmiedet werden, so ergeben sich insofern Schwierigkeiten, als hierfür nur eine ganz geringe Anzahl von Schmieden mit entsprechender Kapazität zur Verfügung stehen und meistens grenzen Aufträge für Ruderschäfte, insbesondere mit Längen über 10 m, an die Kapazität dieser Schmieden. Hinzukommt, dass derartig lange und oftmals auch große Durchmesser aufweisende Ruderschäfte ein hohes Gewicht aufweisen, das oftmals die 100 Tonnen-Grenze überschreitet. Dies erfordert wiederum besondere Konstruktionen der Lagerung und Aufhängung des Ruderblattes am Ruderschaft.

In der EP 0 579 533 A1 wird vorgeschlagen, den Docht einer Schlingerflosse vollständig aus Verbundmaterial herzustellen. Hierdurch ergibt sich ein geringeres Gesamtgewicht der Schlingerflosse. Allerdings kann es bei hohen, auf den Docht wirkenden Belastungen zu Problemen mit der Stabilität bzw. der Biegesteifigkeit des Dochtes kommen.

Die US 6,464,591 B1 und die US 6,350,204 B1 zeigen jeweils Kraftübertragungswellen aus dem Automobilbereich, die zumindest teilweise aus faserverstärktem Kunststoff hergestellt sind.

Es ist daher Aufgabe der vorliegenden Erfindung, ein Ruderschaft zu schaffen, der bei großer Länge ein niedriges Gewicht aufweist und zum Teil aus einem metallischen Werkstoff, insbesondere aus Schmiedeeisen besteht, so dass trotzdem eine hohe Biegefestigkeit und Verwindungssteifigkeit erhalten bleibt.

Gelöst wird diese Aufgabe bei einem Ruderschaft gemäß der eingangs beschriebenen Art mit den im Anspruch 1 angegebenen Merkmalen.

Hiernach besteht die Erfindung darin, dass der Ruderschaft Endabschnitte aus einem metallischen Material, insbesondere aus Schmiedeeisen, und einen mittleren, mit den Endabschnitten verbundenen Abschnitt aus einem nichtmetallischen Material aufweist.

Ferner besteht der mittlere, aus einem nichtmetallischen Material bestehende Abschnitt des Ruderschaftes aus einem Kohlenstoff-Faserverbundstoff oder aus Kohlenstoff-Fasern, bevorzugterweise aus Graphitfasern.

Des weiteren sieht die Erfindung vor, dass die beiden aus Schmiedeeisen bestehenden Endabschnitte des Ruderschaftes an ihren einander zugekehrten Stirnseiten halsartig eingezogene, zapfenförmige Abschnitte aufweisen, deren umlaufende Oberflächen mit Strukturierungen als Haftflächen für den mittleren, aus Kohlenstoff-Fasern gefertigten Abschnitt versehen sind, die in Form von Wicklungen die zapfenförmigen Abschnitte umgeben, wobei die Kohlenstoff-Fasern im gesamten sich über die Länge des mittleren Abschnittes erstreckenden Wicklungsbereich mit einem Gießharz ummantelt und ausgegossen sind.

Weitere vorteilhafte Ausgestaltungen der Erfindung sind Gegenstand der Unteransprüche.

Die erfindungsgemäße Ausgestaltung des Ruderschaftes erbringt den Vorteil, dass Ruderschäfte mit großen Längen, großem Durchmesser und hohem Gewicht für Ruder für Wasserfahrzeuge hergestellt werden können, ohne dass es hierzu einer Fertigung des gesamten Ruderschaftes aus Schmiedeeisen bedarf, denn nur die Endabschnitte des Ruderschaftes sind aus Schmiedeeisen gefertigt, während der zwischen den Endabschnitten liegende mittlere Abschnitt des Ruderschaftes aus einem nichtmetallischen Material besteht und zwar insbesondere aus einem Kohlenstoff-Faserverbundstoff oder aus Kohlenstoff-Fasern, bevorzugterweise aus Graphitfasern, die in Form von Wicklungen den mittleren Schaftabschnitt des Ruderschaftes bilden, wobei die Wicklungen des Kohlenstoff-Faserverbundstoffes bzw. der Kohlenstoff-Fasern sich bis in die gegenüberliegenden Enden der Endabschnitte des Ruderschaftes erstrecken und mit diesen fest verbunden sind. Auf diese Weise wird ein Ruderschaft geschaffen, dessen Endabschnitte aus Schmiedeeisen bestehen und somit den höchsten Belastungen ausgesetzt werden können. Außerdem nehmen die aus Schmiedeeisen bestehenden Endabschnitte des Ruderschaftes die Lager für die Lagerung des Ruderschaftes in einem Ruderkokerlager auf.

In der Zeichnung ist der Gegenstand der Erfindung beispielsweise dargestellt und zwar zeigt:
- Fig. 1: eine im Hinterschiffsbereich vorgesehene Ruderanordnung mit einem in einem Ruderkokerlager angeordneten Ruderschaft,
- Fig. 2: eine vergrößerte Darstellung der Ruderanordnung, teils in einer Seitenansicht, teils in einem senkrechten Schnitt,
- Fig. 3: eine Ansicht auf einen Ruderschaft mit endseitigen Abschnitten aus Schmiedeeisen und mit einem mittleren Schaftabschnitt aus einem nichtmetallischen Material und
- Fig. 4: eine Ansicht auf einen Ruderschaft mit Endabschnitten aus Schmiedeeisen und einem mit den Endabschnitten verbundenen mittleren Abschnitt aus gewickelten Kohlenstoff-Fasern.

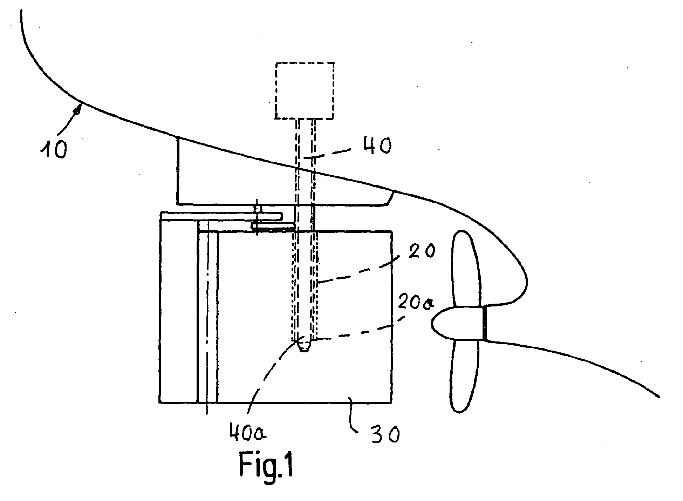

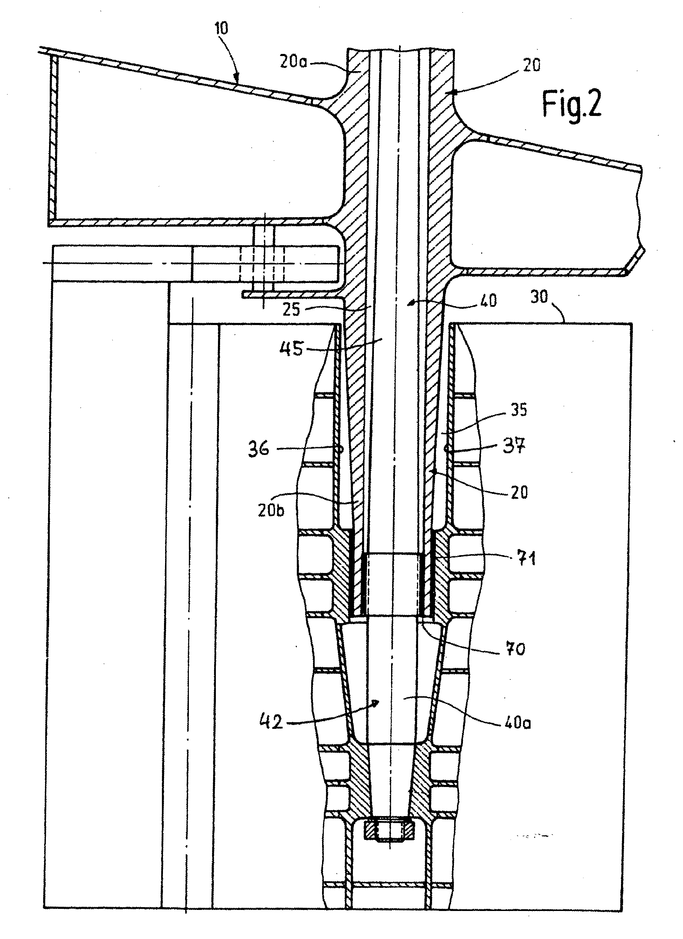

Bei der in Fig. 1 und 2 gezeigten Ausführungsformen ist mit 10 ein Schiffskörper, mit 20 ein Ruderkokerlager mit seinen Enden 20a, 20b, mit 30 ein Ruderblatt und mit 40 ein Ruderschaft bezeichnet.

Das als Kragträger ausgebildete Ruderkokerlager 20 ist mit seinem oberen Ende 20a mit dem Schiffskörper 10 fest verbunden und weist eine Innenbohrung 25 auf, die den Ruderschaft 40 aufnimmt. Das Ruderkokerlager 20 ist in das Ruderblatt 30 hineingeführt, das mit dem freien unteren Ende 20b des durch die Innenbohrung 25 des Ruderkokerlagers 20 hindurchgeführten Ruderschaftes 40 fest verbunden ist. Die im Ruderblatt 30 ausgebildete vorzugsweise zylindrische Einziehung 35 zur Aufnahme des freien Endes 20b des Ruderkokerlagers 20 ist durch eine seitliche Beplankung 36, 37 begrenzt (Fig. 2).

Zur Lagerung des Ruderschaftes 40 weist das Ruderkokerlager 20 mindestens ein Lager auf. Bei dem in Fig. 2 gezeigten Ausführungsbeispiel sind zwei Lager 70, 71 vorgesehen, nämlich ein Innenlager 70 und ein Außenlager 71, wobei das Lager 70 an der Innenwandfläche des Ruderkokerlagers 20 und das andere Lager 71 an der Außenwandfläche des Ruderkokerlagers oder an der Innenwandfläche des an dem Ruderblatt 30 vorgesehenen Lagers ausgebildet ist.

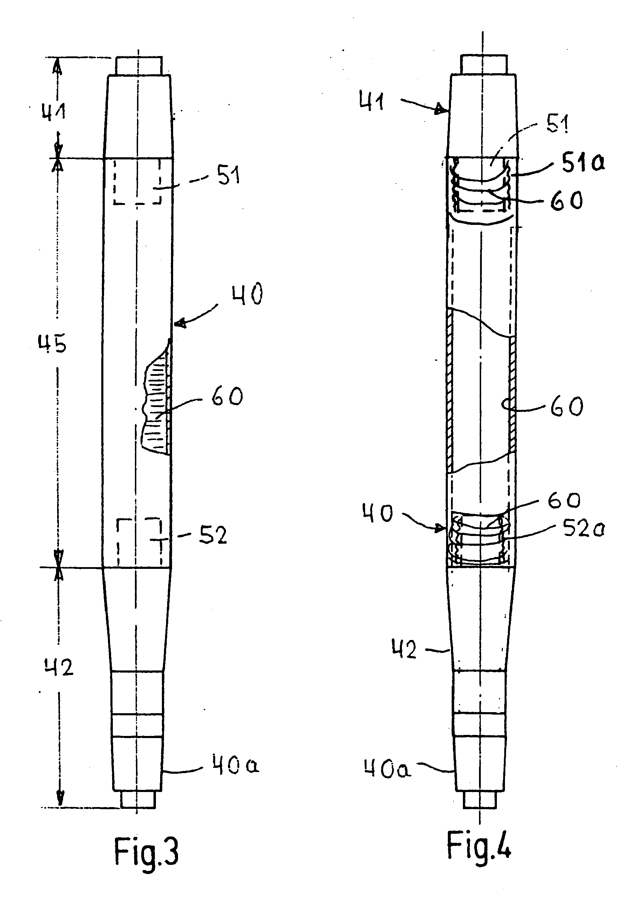

Der in dem Ruderkokerlager 20 gelagerte Ruderschaft 40 ist dergestalt ausgebildet, dass seine beiden Endabschnitte 41, 42 aus Schmiedeeisen bestehen, wohingegen der mittlere Schaftabschnitt 45 aus einem nichtmetallischen Material besteht, insbesondere aus einem Kohlenstoff-Faserverbundstoff oder aus Kohlenstoff-Fasern, bevorzugterweise aus Graphitfasern (Fig. 3). Unter Schmiedeeisen wird ein Eisen mit einem unter 0,8 % liegendem Kohlenstoffgehalt verstanden.

Für die Befestigung des mittleren Schaftabschnittes 45 des Ruderschaftes 40 können verschiedene konstruktive Ausgestaltungen vorgesehen sein. Wie die Ausführungsform nach Fig. 4 zeigt, weisen die einander gegenüberliegenden Stirnseiten der beiden Endabschnitte 41, 42 zapfenförmige Abschnitte 51, 52 auf, die bevorzugterweise mit einer Außenwandstrukturierung 51a, 52a versehen sind, um die Griffigkeit und den Halt des mittleren Schaftabschnittes 45 aus Kohlenstoff-Fasern zu gewährleisten. Bevorzugterweise werden die Kohlenstoff-Fasern bzw. der Kohlenstoff-Faserverbundstoff durch Wicklungen 60 auf den Zapfen 51, 52 der Endabschnitte 41, 42 befestigt, wobei die Wicklungen sich über den Umfang der beiden Zapfen 51, 52 und über die gesamte Länge des mittleren Schaftabschnittes 45 erstrecken. Zur Erhöhung der Festigkeit sind die Kohlenstoff-Fasern mit einem Gießharz ummantelt bzw. ausgegossen.

Besonders vorteilhaft ist die erfindungsgemäße Ausgestaltung des Ruderschaftes insofern, als sehr große Längen von Ruderschäften bei niedrigstem Gewicht hergestellt werden können. Bei einem beispielsweise 10 m Länge aufweisenden Ruderschaft wird das Gewicht um mehr als 50 % gegenüber einem Ruderschaft, der vollständig aus Schmiedeeisen gefertigt ist, verringert.

Eine weitere Ausführungsform sieht vor, dass der in dem Ruderkokerlager 20 angeordnete Ruderschaft 40 im Bereich der im Ruderkokerlager 20 angeordneten Lager 70, 71 Materialverstärkungen 80 aufweist, wobei bevorzugterweise die Materialverstärkungen 80 im Bereich des Ruderkokerlagerendes 20b vorgesehen sind. Diese Materialverstärkungen 80 sind an dem Ruderschaft 40 bevorzugterweise am Endabschnitt 42 des Ruderschaftes 40 im Bereich des am Ruderkokerlager 20 vorgesehenen Innenlagers 70 ausgebildet (Fig. 2).

### Bezugiszeichenliste

- 10: Schiffskörper
- 20: Ruderkokerlager
- 20a: oberes Ruderkokerlagerende
- 20b: unteres Ruderkokerlagerende
- 25: Innenbohrung
- 30: Ruderblatt
- 35: zylindrische Einziehung
- 36: seitliche Beplankung
- 37: seitliche Beplankung
- 40: Ruderschaft
- 40a: unteres Ruderschaftende
- 41: Endabschnitt
- 42: Endabschnitt
- 45: mittlerer Schaftabschnitt
- 51: Zapfen
- 52: Zapfen
- 51 a: Oberflächenstrukturierung
- 52a: Oberflächenstrukturierung
- 60: Kohlenstoff-Faserwicklungen
- 70: Innenlager
- 71: Außenlager
- 80: Materialverstärkung

## Patentansprüche

1. Ruderschaft für Ruder für Wasserfahrzeuge, wobei
der Ruderschaft (40) Endabschnitte (41, 42) aus einem metallischen Material, insbesondere aus Schmiedeeisen, und einen mittleren, mit den Endabschnitten (41, 42) verbundenen mittleren Schaftabschnitt (45) aus einem nichtmetallischen Material aufweist, wobei der mittlere aus einem nichtmetallischen Material bestehende Schaftabschnitt (45) des Ruderschaftes (40) aus einem Kohlenstoff-Faserverbundstoff oder aus Kohlenstoff-Fasern, bevorzugterweise aus Graphitfasern, besteht, und wobei
die beiden aus Schmiedeeisen bestehenden Endabschnitte (41, 42) des Ruderschaftes (40) an ihren einander zugekehrten Stirnseiten halsartig eingezogene, zapfenförmige Abschnitte (51, 52) aufweisen, deren umlaufende Oberflächen mit Strukturierungen (51 a, 52a) als Haftflächen für den mittleren aus Kohlenstoff-Fasern gefertigten Schaftabschnitt (45) versehen sind, die in Form von Wicklungen (60) die zapfenförmigen Abschnitte (51, 52) an den Endabschnitten (41, 42) umgeben, wobei die Kohlenstoff-Fasern im gesamten sich über die Länge des mittleren Schaftabschnittes (45) erstreckenden Wicklungsbereich mit einem Gießharz ummantelt und ausgegossen sind.

2. Ruderschaft nach Anspruch 1,
**dadurch gekennzeichnet,**
**dass** das Verhältnis der Längen der Endabschnitte (41, 42) und des mittleren Schaftabschnittes (45) des Ruderschaftes (40) ¹/₆ zu ²/₃ zu ¹/₆ sind.

3. Ruderschaft, der in einem Ruderkokerlager (20) angeordnet ist, nach einem der Ansprüche 1 bis 2,
**dadurch gekennzeichnet,**
**dass** der Ruderschaft (40) im Bereich der im Ruderkokerlager (20) angeordneten Lager (70, 71) Materialverstärkungen aufweist.

4. Ruderschaft nach Anspruch 3,
**dadurch gekennzeichnet,**
**dass** die Materialverstärkungen (80) im Bereich des Ruderkokerlagerendes (20b) vorgesehen sind.

5. Ruderschaft nach Anspruch 3 oder 4,
**dadurch gekennzeichnet,**
**dass** die Materialverstärkung (80) im Bereich des am Ruderkokerlager (20) vorgesehenen Innenlagers (70) ausgebildet sind.

## Claims

1. Rudder shaft for rudders of water vehicles, whereby
the rudder shaft (40) has end portions (41, 42) made of a metallic material, in particular of wrought iron, and a central shaft portion (45) made of a non metallic material connected with the end portions (41, 42), whereby the central shaft portion (45) of the rudder shaft (40) made of a non metallic material is made of a carbon fibre composite material or of carbon fibres, preferably of graphite fibres and whereby
both end portions (41, 42) of the rudder shaft (40) which are made of wrought iron have, on their front sides turned to each other, neck-type recessed trunnion-shaped portions (51, 52), the peripheral surfaces of which are provided with structures (51a, 52a) as adhesive surfaces for the central shaft portion (45) made of carbon fibres which surround as windings (60) the trunnion-shaped portions (51, 52) on the end portions (41, 42), whereby the carbon fibres are sheathed and cast-in in the whole winding area which extends over the length of the central shaft portion (45) with a cast resin.

2. Rudder shaft according to claim 1,
**characterized in**
**that** the ratio of the lengths of the end portions (41, 42) and of the central shaft portion (45) of the rudder shaft (40) is 1/6 to 2/3.

3. Rudder shaft, which is disposed in a rudder trunk bearing (20), according to any of the claims 1 or 2,
**characterized in**
**that** the rudder shaft (40) has material reinforcements in the area of the bearings (70, 71) disposed in the rudder trunk bearing (20).

4. Rudder shaft according to claim 3,
**characterized in**
**that** the material reinforcements (80) are provided in the area of the rudder trunk bearing end (20b).

5. Rudder shaft according to claim 3 or 4,
**characterized in**
**that** the material reinforcements (80) are configured in the area of the inner bearing (70) disposed in the rudder trunk bearing (20).

## Revendications

1. Arbre de safran pour un gouvernail de navires,
l'arbre de safran (40) présentant des portions d'extrémité (41, 42) en un matériau métallique, en particulier en fer forgé, et une portion centrale d'arbre (45), reliée aux portions d'extrémité (41, 42) en un matériau non métallique, la portion centrale d'arbre (45) de l'arbre de safran (40) qui est en un matériau non métallique étant constituée par un matériau composite de carbone et fibres ou par des fibres de carbone et
les deux portions d'extrémité (41, 42) en fer forgé de l'arbre de safran (40) présentant, sur leurs faces frontales tournées l'une vers l'autre, des portions rentrées en col en forme de tourillon (51, 52) dont les surfaces périphériques sont pourvues de structures (51 a, 52a) comme surfaces adhésives pour la portion centrale d'arbre (45) fabriquée en fibres de carbone qui entourent, en forme d'enroulements (60), les portions en forme de tourillon (51, 52) sur les portions d'extrémité (41, 42), les fibres de carbone étant gainées et coulées sur toute la zone d'enroulements qui s'étend sur la longueur de la portion centrale d'arbre (45) avec une résine de coulée.

2. Arbre de safran selon la revendication 1,
**caractérisé en ce**
**que** le rapport des longueurs des portions d'extrémité (41, 42) et de la portion centrale d'arbre (45) de l'arbre de safran (40) est d'1/6 à 2/3.

3. Arbre de safran, qui est placé dans un palier de trou de jaumière (20), selon l'une des revendications 1 à 2,
**caractérisé en ce**
**que** l'arbre de safran (40) présente des renforcements de matière dans la zone des paliers (70, 71) placés dans le palier de trou de jaumière (20).

4. Arbre de safran selon la revendication 3,
**caractérisé en ce**
**que** les renforcements de matière (80) sont prévus dans la zone de l'extrémité du palier de trou de jaumière (20b).

5. Arbre de safran selon la revendication 3 ou 4,
**caractérisé en ce**
**que** les renforcements de matière (80) sont configurés dans la zone du palier intérieur (70) prévu sur le palier de trou de jaumière (20).
